# EUROPEAN PATENT SPECIFICATION

(11) **EP 3 504 012 B1**
(45) Date of publication and mention of the grant of the patent: **25.12.2024**
(21) Application number: 17847075.3
(22) Date of filing: 29.08.2017
(51) Int. Cl.: B08B 9/045, B08B 9/043, E21B 41/00, B65H 75/42, B65H 75/44

(54) **CLEANING INTERIORS OF SUBSEA STRUCTURES**
REINIGUNG DER INNENRÄUME VON UNTERWASSERSTRUKTUREN
NETTOYAGE DE L'INTÉRIEUR DE STRUCTURES SOUS-MARINES

(30) Priority: 29.08.2016 NO 20161372
(43) Date of publication of application: 03.07.2019
(73) Proprietor: Pipetech International AS, 4313 Sandnes (NO)
(72) Inventor: MARTINSEN, Arve, 4353 Klepp St. (NO); LUND, Knut, 3960 Stathelle (NO); BØ, Håvard, 4070 Randaberg (NO)
(74) Representative: Håmsø Patentbyrå AS
(86) International application number: PCT/NO2017/050212
(87) International publication number: WO 2018/044175

(56) References cited:
- WO-A1-2015/075762
- WO-A1-2015/171874
- WO-A1-98/07532
- WO-A2-2010/030190
- DE-A1- 3 148 225
- FR-A1- 2 704 537
- US-A- 3 451 089

## Description

### Technical field

The present invention relates in particular to the cleaning of interiors of structures such as subsea structures.

### Background

Structures such as pipes or other structures which may contain fluid in their interiors are increasingly installed for long-term use subsea, e.g., on the seabed. Such structures may for example be employed in the hydrocarbon exploration and production industry for containing, processing, or transporting fluids which may for instance include hydrocarbons obtained from subsurface hydrocarbon reservoir or other fluids. These structures can suffer from deposits of scale, dirt, or other material that may build up over time and may eventually interrupt or block the interior space and/or adversely affect proper performance of the structure. When this happens, it may be necessary to clean the interior of the structure to remove the deposits, etc. Pipes known as subsea manifolds can be particularly susceptible to such problems because these provide the connection points for multiple flow lines connecting to the manifold, and they are generally of a structure which includes tight bends and corners e.g., where the lines connect.

An existing method of deposit removal in subsea structures includes mechanical removal using a pig. However, pigs can be inconvenient, time consuming and costly to operate, and may not be suitable in various deployment scenarios, such as in manifolds or tanks or the like.

In general, there has been a lack of versatile solutions for cleaning subsea structures, and doing so efficiently and effectively, such as in those structures mentioned above. In this light, the inventors have identified a need for improvements, and an aim of the present invention is to obviate or at least mitigate various drawbacks associated with the prior art. WO 2010/030190 A2 discloses an ` intervention system for subsea completed wellbores. FR 2 704 537 A1 discloses a cleaning unit comprising a fluid delivery hose and a hose reel rotatable around two perpendicular axis.

### Summary of the invention

According to a first aspect of the invention, there is provided a subsea unit for cleaning an interior of a subsea structure, the subsea unit comprising: a hose for delivering fluid from an inlet into an interior of the subsea structure to be cleaned for cleaning the interior; a hose reel being rotatable around a first axis and a second axis, wherein the rotation of the hose reel around the first axis is for feeding the hose into or retracting the hose from the subsea structure and rotation of the hose reel around the second axis is for rotating the hose around its longitudinal axis and a feeder for controlling strain in the hose during feeding and/or retraction of the hose, in accordance with claim 1.

According to a second aspect of the invention, there is provided a system for cleaning an interior of a subsea structure, the system comprising a subsea unit according to the first aspect of the invention, the subsea unit further comprising: a fluids inlet and a hydraulics inlet.

The subsea unit may further comprises an entry connector, e.g. a pipe entry connector, for connecting to the subsea structure to be cleaned, through which entry connector the hose may be fed to enter the interior of the subsea structure.

The hose may comprise a nozzle or an opening in a portion of the hose to be inserted into the interior of the subsea structure, for letting fluid out of the hose for flushing the interior of the subsea structure. The fluid may be or may comprise water. The fluid may include a cleaning additive. The hose may be a water hose. The fluids inlet may be a water inlet.

The hose reel may allow the hose to be rotated around its longitudinal axis while being fed into a pipe in a subsea manifold. This configuration may reduce problems related to feeding of the hose into the structure to be cleaned, reducing pigtail effects, thereby making it easier to reach far into the structure even through sharp bends. Rotation of the hose around its longitudinal axis may also be beneficial with regards to the cleaning process, both as it may reduce pigtail effects and as the rotation may allow the fluid stream from the nozzle of the hose to more efficiently reach all areas inside the structure as the hose rotates.

The first and second axes may typically be perpendicular to each other. The rotation of the hose reel may be powered by hydraulics and/or by pressurised water. Thus, the hose reel may be driven so as to rotate by hydraulic fluid from the hydraulics inlet or water from a water inlet. The subsea unit may include a hydraulic power unit mounted on a frame of the subsea unit.

The subsea structure may comprise a pipe, which may be a pipe of a subsea manifold. The subsea structure may comprise a subsea manifold.

The subsea unit may comprise one or more levers. The levers may control the direction of the hose reel, and whether the hose reel feeds or retracts the hose. The levers may be controlled by use of an ROV (Remotely Operated Vehicle). The feeder may be passive, configured with a load to control the strain. The purpose of the feeder may be mainly to avoid a pigtail effect in the hose during feeding and/or retraction.

The subsea unit may further comprise at least one guide funnel. This guide funnel may allow for mounting the subsea unit securely on a subsea manifold, as each one of the at least one guide funnel may be configured to fit onto a guidepost of the manifold.

The at least one guide funnel may be adjustable in length, e.g., to help to allow the subsea unit to fit manifolds or other structures of different sizes.

The subsea unit may further comprise a stiff hose guide. Such a hose guide may be useful and may be preferable for avoiding a pigtail effect on the hose during operations, as the hose guide may aid in constraining the movement of the hose.

Furthermore, the subsea unit may comprise a subsea dredge socket for connecting to a subsea dredge. Using a subsea dredge with the subsea unit during cleaning operations can aid in removal of deposits as they are being flushed from the inside of the subsea structure.

The subsea unit may further comprise a lifting lug. The lifting lug may be arranged to be connected to a wire by use of a hook, to allow for a crane or other lifting equipment to carry the subsea unit as it is being lowered to or lifted from the subsea structure, or to or from a location on the seabed at or near the subsea structure.

The subsea unit may comprise a guide wheel or a set of guide wheels, for guiding the water hose between the hose reel and the feeder.

The system may further comprise a fluids supply for providing fluid for cleaning the interior of the subsea structure, e.g. a pipe in the subsea manifold.

In embodiments where the fluid comprises water and the fluids supply is a water supply, the water supply may be arranged to deliver water with a pressure of between 600 and 1200 bar (60MPa-120MPa). More preferably, the water pressure may be between 700 and 1150 bar (70MPa-115MPa). Even more preferably, the water pressure may be between 800 and 1100 bar (80MPa-110MPa). Even more preferably, the water pressure may be between 900 and 1050 bar (90MPa-105MPa). High water pressure will allow for more efficient cleaning.

The fluids supply may be placed topside, such as on a vessel or a platform.

Furthermore, the system may comprise a further hose, for connecting the fluids supply to the fluids inlet of the subsea unit.

The system may further comprise a hydraulics source. Hydraulics may be used e.g. for rotating the hose reel. Furthermore, the system may further comprise a hydraulics hose which may be arranged to extend from the hydraulics source to the hydraulics inlet of the subsea unit.

The system may be configured to be operated at least partly by use of an ROV. The ROV may be used to operate one or more levers for controlling the direction of the rotations of the hose reel. An ROV may be used to connect the hydraulics hose to the hydraulics inlet and to connect the further hose to the fluids inlet. Furthermore, an ROV may be used to connect the entry connector to the subsea structure, e.g., to an entrance thereof. The subsea structure may for instance be a pipe in the subsea manifold to be cleaned. The system may include the ROV.

The ROV may comprise the hydraulics source. Otherwise, the hydraulics source may be a HPU (Hydraulic Power Unit) to be placed subsea near the subsea unit, or on a frame of the subsea unit, or a topside unit may comprise the HPU. Using a subsea HPU placed near the subsea unit may be preferable, as it may then not require a hydraulics hose to extend all the way from topside to the subsea unit. Using an ROV with an HPU as the hydraulics source can be even more preferable if an ROV is used for operating the cleaning system, as a separate unit simply for supplying hydraulics may then be avoidable.

The system may further comprise one or more hot stabs. Hot stabs may be used to connect the hydraulics hose and/or the further water hose to the hydraulics inlet and/or the water inlet respectively, e.g., to minimize the chance of any leakage to the surrounding environment.

According to a third aspect of the invention, there is provided a method of using the system according to the second aspect of the invention for cleaning the interior of the subsea structure.

The method may further comprise any one or more of the steps of:
moving the subsea unit toward the seabed to bring the unit into proximity to the subsea structure to be cleaned;
landing the subsea unit on or adjacent to the subsea structure to be cleaned;
guiding the hose into the interior of the subsea structure; and
cleaning the interior mechanically by flushing with fluid delivered into the interior from the hose.

The hose may be a water hose.

The subsea structure may be a subsea manifold, and the moving step may comprise moving the subsea unit to the subsea manifold to be cleaned. The subsea structure may comprise a pipe of a subsea manifold.

The fluid may be or may comprise water. Using water to flush out deposits from a pipe may be beneficial, as it may be cheaply available, efficient in use, non-abrasive, and/or of low contamination risk to the environment.

The method may comprise the step of deploying the subsea unit into a sea through a moon pool. A moon pool may be an opening in the floor or base of a hull, platform or chamber, e.g. of a sea-surface vessel, for providing sheltered access to a sea. Deploying the subsea unit through a moon pool can make the operation safer.

Furthermore, the method may involve guiding the subsea unit while being lowered to the subsea structure, or lowered into location at, near, or onto a subsea structure, by use of template guide lines. Using such guide lines may make it easier to hit the correct landing spot.

The method may further comprise the step of landing a guide funnel of the subsea unit on a designated guide post on the subsea structure. Having a guide funnel placed onto a guide post may aid in securing the subsea unit in place on the subsea structure, or in place at, near or adjacent to the subsea structure to be cleaned.

Furthermore, the method may comprise the step of rotating the hose around its longitudinal axis while feeding the hose into the interior of the subsea structure, e.g. a pipe in the subsea manifold. The method may include operating a hydraulic motor to drive the hose reel to rotate the hose around its longitudinal axis. Rotating the hose around its longitudinal axis while feeding it into the pipe can aid in avoiding an unwanted pigtail effect of the hose, and may increase the efficiency of the feed e.g. by making it easier to pass the hose through bends in the subsea structure e.g. pipe.

The method may further comprise the step of rotating the hose around its longitudinal axis while flushing the inside of the pipe. This may improve the cleaning efficiency, as a nozzle or an outlet in the inserted portion of the pipe, by being rotated can result in altering the direction of the fluid stream and thus increase or otherwise change the area of inside of the structure or pipe that can be directly hit by the fluid stream.

Furthermore, the method may comprise removal of flushed-off deposits by use of a subsea dredge. Removal of flushed-off deposits can be an important part in the cleaning process, since a subsea dredge can be capable of removing flushed-off deposits efficiently.

The guiding of the hose into the interior of the subsea structure, e.g. a pipe in the subsea manifold, may involve guiding the hose through a stiff hose guide of the subsea unit ahead of feeding the hose into the subsea structure. Guiding the hose through the stiff guide can constrain the hose from moving in an unwanted way, which can help prevent a pigtail effect in the hose on its way towards the subsea structure.

The method may further comprise filling the further hose with fluid prior to lowering a second end portion of the further hose down to the subsea unit. This may be done to avoid a collapse in the further hose due to the increasing water pressure of the sea as it is lowered towards the subsea unit.

The cleaning may be performed to remove a deposit in the interior of the structure to be cleaned. The deposit may be as described anywhere else herein.

Any of the first to third aspects of the invention may include one or more further features as described in relation to any other aspect, wherever described herein.

There will now be described, by way of example only, embodiments of the invention, with reference to the accompanying drawings, in which:
- Figure 1: is a representation showing a subsea unit obliquely from above according to an embodiment of the invention;
- Figure 2: is a representation showing the subsea unit of Figure 1 from above;
- Figure 3: is a representation depicting a cross section of the subsea unit of Figures 1 and 2;
- Figure 4: is a representation illustrating the hose reel with a water hose and a set of guide wheels of the subsea unit of Figures 1 to 3 in enlarged scale; and
- Figure 5: is a schematic representation of a system including the subsea unit of Figures 1 to 4 in smaller scale.

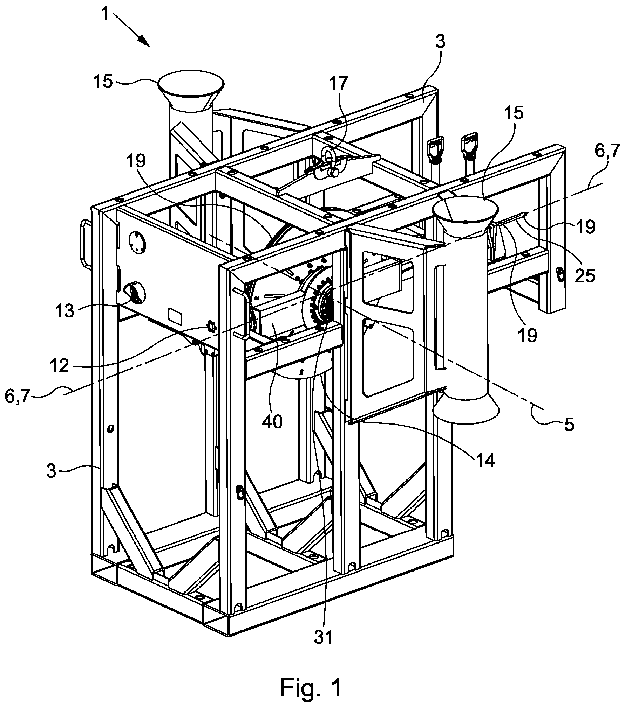

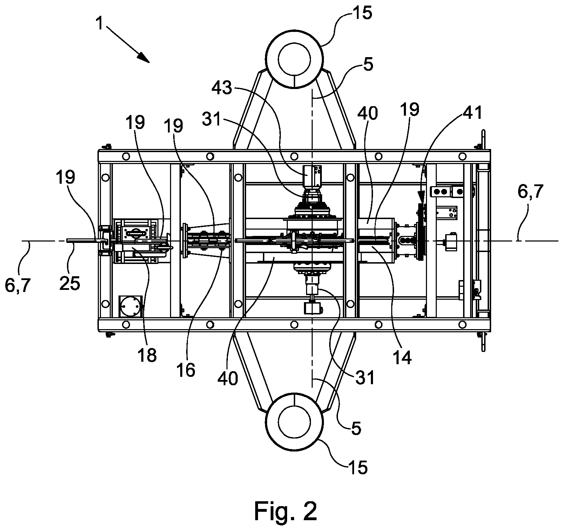

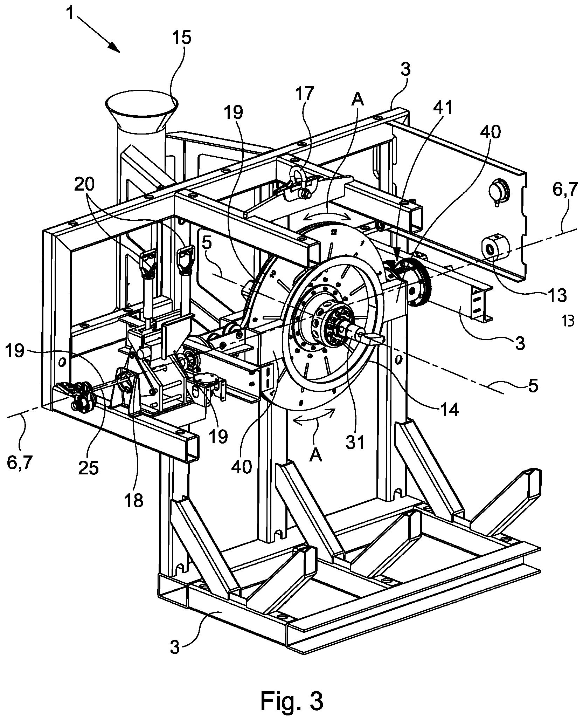

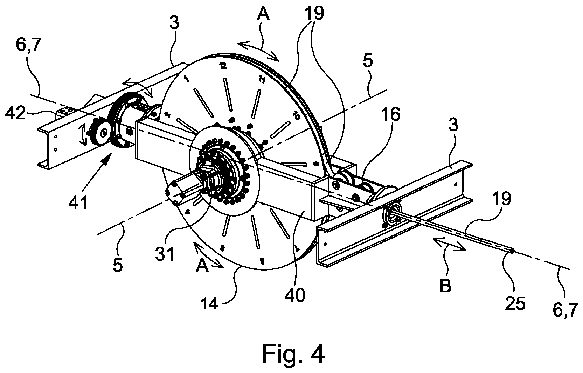

In Figures 1 to 4, there is shown a subsea unit 1 for use in a cleaning system for cleaning an interior of a subsea structure. The subsea unit 1 in this example has a hydraulics inlet 12, a water inlet 13, a hose reel 14, two guide funnels 15, a lifting lug 17, and a water hose 19. The hose reel 14 is configured to rotate around a first axis 5 and a second axis 6. The rotation around the first axis 5 is for feeding and retracting the water hose 19 and the rotation around the second axis 6 is for rotating the water hose 19 around its longitudinal axis 7, which in this example is coincident with the second axis 6. The hose 19 is wound on the reel 14 in multiple single-width layers.

The present example is given with reference to cleaning by way of water. In other variants however, other fluids are employed instead of water. Such other fluids may comprise liquid or gas or combinations thereof and may comprise solvents or other substances to facilitate cleaning. The other fluid may comprise a liquid or gas or combination thereof which is provided with a cleaning additive for facilitating cleaning. The choice of fluid could in general depend upon the type of subsea structure that is to be cleaned. Subsea structures may include pipes or internal bores or conduits, e.g. a pipe manifold where flow lines from different areas of the seabed are tied in to the pipe manifold. However, the subsea unit 1 and cleaning system may likewise be employed to clean the interior cavities in any other kind of subsea equipment. By spooling out the hose from the hose reel 14, the end of the hose may be pushed far into the interior space of the subsea equipment, into difficult to reach regions, and advantageously around tight corners or bends. This may be facilitated particularly by the ability of the hose to be rotated about its own long axis.

Surfaces of the interior to be cleaned may have deposits of particles, films, or scale or other material which may need to be removed. The cleaning fluid delivered from the hose 19 into the space may work mechanically on such deposits, films, scale, or the like, which may be sought to be removed.

Referring again to Figure 1, the portion of the hose 9 which is to be spooled out from the hose reel 14 is provided with a nozzle 25, typically at or near the spooled out end of the hose 19. In order to clean the interior of the subsea structure, water passes through the hose 19 and is directed out of the nozzle 25 into the interior of the pipe. Water is supplied under pressure from a water source through the water inlet 13 and into the hose 19 stored on the reel 14. In other variants, the hose can have other kinds of opening from the spooled out end for letting out water from the hose 19 into the interior of the structure to be cleaned.

The pressure of the water is typically supplied from above sea surface such that it counters and exceeds the subsea pressure to deliver successfully into the interior of the subsea structure. The water in such a case may be supplied through a connecting water line (not shown), e.g. a fluid line in an umbilical connecting the subsea unit 1 with sea surface facility.

The subsea unit 1 has a rigid support frame 3 for supporting the various components of the unit 1 upon a seabed. The rigid frame 3 may be formed of steel uprights and cross members joined together as required, so that it sinks and comes to rest on the seabed when lowering under gravity.

The hose reel 14 is mounted on an axle 31 by way of which the hose reel rotates about the axis 5 to spool the hose 19 out or in, as indicated by arrows A, B. The water from the water inlet 13 is supplied through an inside of the axle 31 to connect with an end of an innermost section of the hose on the base of reel 14. For this purpose, an appropriate connecting line (not shown) between the water inlet 13 and the hose 19 can be used.

The hose reel 14 and axle 31 is further mounted on a rotatable cradle 40 so as to be supported by the frame 3. The cradle 40 can rotate relative to the frame 3 about the axis 6. The axes 5 and 6 are perpendicular to one another. The cradle 40 is coupled to the frame 3 through interconnecting planetary gears 41 which are driven by a motor 42 to rotate the cradle 40, and hence the hose reel 14 about the second axis 6. The motor 42 is operated by hydraulics, i.e., via hydraulic power fluid e.g. oil, supplied to the subsea unit 1 through the hydraulics inlet 12. In this way, the rotation of hose reel 14 about the axis 6 can be carried out so as to turn and rotate the hose 19 that is being fed into the subsea structure from the subsea unit about its longitudinal axis 7.

The rotation of the hose reel 14 is driven by a motor 43 which is also hydraulically powered by the hydraulics supplied through the hydraulics inlet to the motor 43. The motor 43 can then be controlled to spool the hose 19 in or out as required.

The hydraulics, e.g., hydraulic fluid e.g., oil, is supplied typically from a hydraulics power unit (HPU) through a connecting hydraulics line to the hydraulics inlet.

The HPU may be located above sea surface or on an ROV which may be employed to facilitate operating the subsea unit 1. Alternatively, the subsea unit 1 includes a hydraulic power unit mounted on the frame 3. Electrical power for operating the HPU may then be supplied from surface via an electrical umbilical (not shown).

It can be appreciated that the unit 1 is further arranged so that the direction in which the hose 19 is fed out of the subsea unit 1 into the interior of the subsea structure is controlled. More particularly, the unit 1 is arranged to provide a track along which the hose 19 is moved and guided. It can be noted that the subsea unit 1 includes a feeder 18 and a set of guide wheels 16 for the water hose 19. In the example shown, the hose 19 passes through the guide wheels 16 and through the feeder 18 so as to determine the direction and orientation of the hose 19. The portion of the hose 19 leaving the feeder 18 is supported with its longitudinal axis 7 horizontal, and moves axially away from the subsea unit 1 for insertion into the interior of the structure to be cleaned.

In other embodiments, the subsea unit 1 may be arranged to leave the subsea unit 1 with the long axis 7 of the hose 19 in a different orientation, e.g. to align appropriately with an opening to an interior of the structure to be cleaned.

The feeder 18 assists with the directional positioning of the hose 19 as it leaves the subsea unit 1 and is fed into the structure to be cleaned. In addition, it is arranged to help control the tension in the hose 19 when spooling out or in from the hose reel 14. For instance, if the spool in is too aggressive such that a predetermined tension limit is exceeded, this may be detected in the feeder such that an adjustment force can be applied to the hose 19 accordingly.

The subsea unit 1 exemplified in Figures 1 to 4 has two guide funnels 15. The guide funnels 15 are arranged to fit around corresponding guide posts to facilitate locating the subsea unit 1 in correct, predetermined location on the seabed. A subsea template, e.g. at the location of a manifold to be cleaned, may have upright guide posts, and by lowering the unit 1 so that the top of the guide posts enter and received through the guide funnels 15, the subsea unit 1 is brought into correct position.

The subsea unit includes a lifting lug 17, for lifting and lowering e.g. suspended on a hook from a wire. In addition, the subsea unit 1 includes two levers 20 for controlling the directions of rotation for the hose reel 14. The levers 20 may for example be switched by an ROV manipulator to change the rotation direction.

The subsea unit 1 also typically includes a controller for controlling the motors 42, 43 and delivery of hydraulics for rotating hose reel 14 appropriately for feeding the hose 19 in or out from the structure to be cleaned. The system provides communication with the controller to operate the hose according to instructions. Control signals or instructions for the controller for controlling the motors 42, 43 and/or the HPU and/or other data may be communicated between the subsea unit 1 and above surface control computer through a communication line, for instance an electrical or optical line in an umbilical extending from the subsea unit 1 to above sea surface.

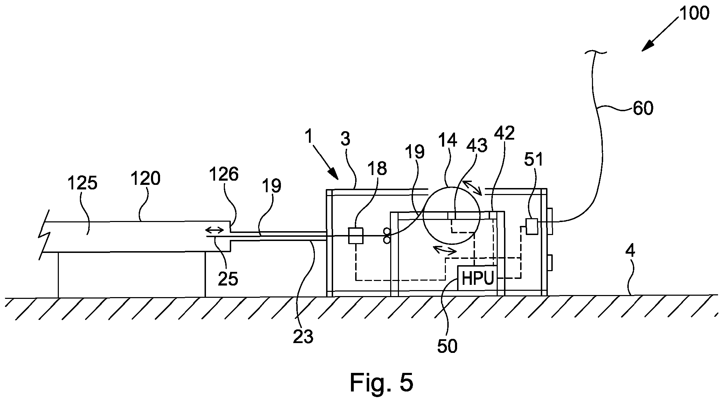

Turning now to Figure 5, a system 100 includes the subsea unit 1 in use for cleaning the interior 125 of a subsea structure 120. The hose 19 is spooled out from the hose reel 14 and fed from the subsea unit 1 into the interior 125 of the structure 120. The unit 1 includes the HPU 50, a controller 51, and an umbilical 60 connecting to the surface with the subsea end of the umbilical 60 connected at the subsea unit 1 for providing electrical power and signals for the HPU for driving the motors 42, 43. The controller 51 receives data from the feeder 18.

In order to position the subsea unit 1 in place, the unit is lowered from a vessel onto the seabed 4. An entry connector 33 of the subsea unit 1 is connected to an entrance 126 to the interior 125 of the subsea structure 120. The entry connector 33 is in the form of tubing which extends between the frame 3 of the subsea unit 1 and the structure 120, and the hose 19 is fed through the tubing of the entry connector 33 into the interior 125 of the structure 120 by spooling out the hose reel 14 by operating the motors 42, 43 appropriately. The entry connector 33 may thus provide protection around the hose 19 as it passes into the structure 120 to be cleaned such as from effects of currents or the like. It also helps to guide the hose 19 to the entrance of the structure 120 from the feeder 18. An ROV may be utilised to make the connection of the entry connector 33 to the entrance to the interior of the subsea structure 120.

When inserted, in order to clean the interior 125, water is supplied and allowed to exit the hose from the nozzle 125 into the interior 125. The water may jet out of the nozzle to clean and wash away deposits on the inside walls of the interior of the structure 120. As cleaning progresses, the hose 19 is fed further into the interior 125 by spooling out the reel 14 by operating the motors 42, 43 appropriately. The hose 19 is rotated about its own axis to facilitate negotiation of bends or corners in the interior 125. The inserted end of the hose 19 may therefore be controlled to facilitate positioning the end, e.g. into difficult to reach corners or bends in the interior structure. When the cleaning operation is concluded, the hose 19 is reeled in by reversing the direction of the motor 43. The hose 19 is brought back out of the structure 120 through the entry connector 33 and onto the subsea unit1. The dashed lines in Figure 5 signify data communication lines.

The term 'subsea' is used herein to refer to seas which include for example open oceans, inland seas, lakes, rivers and other waterways, which may comprise freshwater or salt water.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

## Claims

1. A subsea unit (1) for cleaning an interior (125) of a subsea structure (120), the subsea unit (1) comprising:
a hose (19) for delivering fluid from an inlet into an interior (125) of the subsea structure (120) to be cleaned for cleaning the interior;
a hose reel (14) being rotatable around a first axis (5) and a second axis (6), wherein the rotation of the hose reel around the first axis (5) is for feeding the hose into or retracting the hose (19) from the subsea structure (120) and rotation of the hose reel around the second axis (6) is for rotating the hose (19) around its longitudinal axis (7); and,
a feeder (18) for controlling strain in the hose during feeding and/or retraction of the hose.

2. A system (100) for cleaning an interior of a subsea structure (120), the system comprising the subsea unit (1) according to claim 1, the subsea unit (1) further comprising:
a fluids inlet (13); and
a hydraulics inlet (12).

3. The system according to claim 2, wherein the subsea unit (1) further comprises an entry connector (33) for connecting to the subsea structure (120) to be cleaned, through which entry connector (33) the hose (19) may be fed to enter the interior of the subsea structure.

4. The system according to either claim 2 or claim 3, wherein the hose comprises a nozzle (25).

5. The system according to any one of claims 2 to 4, wherein the fluid is or comprises water.

6. The system according to any one of claims 2 to 5, wherein the first and second axes (5, 6) are perpendicular to each other.

7. The system according to any one of claims 2 to 6, wherein the subsea unit (120) includes a hydraulic power unit mounted on a frame (3) of the subsea unit (1).

8. The system according to any one of claims 2 to 7, wherein the hose reel (14) is driven to rotate about either or both the first and second axes (5, 6) by hydraulic power from a hydraulic power unit operable using hydraulic fluid from the hydraulics inlet.

9. The system according to any one of claims 2 to 8, wherein the subsea unit further comprises at least one guide funnel (15) for mounting the subsea unit (1) securely on a subsea wellhead.

10. The system according to any one of claims 2 to 9, wherein the subsea unit (1) further comprises an entry connector and a stiff hose guide, configured to guide the hose (19) at least a part of the way from the hose reel (14) to the entry connector.

11. The system according to any one of claims 2 to 10, wherein the subsea unit (1) further comprises a subsea dredge socket for connecting to a subsea dredge.

12. The system according to any one of claims 2 to 11, further comprising a fluids supply.

13. A method of using the system (100) according to any one of claims 2 to 12 for cleaning the interior (125) of the subsea structure (120).

14. The method according to claim 13 which further comprises the steps of:
moving the subsea unit (1) toward the seabed (4) to bring the unit into proximity to the subsea structure (120) to be cleaned;
landing the subsea unit (1) on or adjacent to the subsea structure (120) to be cleaned;
guiding the hose (19) into the interior (125) of the subsea structure (120); and
cleaning the interior (125) mechanically by flushing with fluid delivered into the interior from the hose (19).

15. The method according to claim 13 or 14, which further comprises the step of deploying the subsea unit (1) into a sea through a moon pool.

16. The method according to any one of claims 13 to 15, wherein the subsea unit (1) while being lowered into proximity to the structure is guided by template guide lines.

17. The method according to any one of claims 13 to 16, wherein the subsea unit (1) comprises at least one guide funnel (15), and wherein the landing of the subsea unit (1) onto or adjacent to the subsea structure comprises the step of landing the guide funnel (15) on a designated guide post on or nearby the subsea structure.

18. The method according to any one of claims 13 to 17, which further comprises the step of rotating the hose (19) around its longitudinal axis while feeding an end of the hose (19) into the interior of the subsea structure and/or while flushing the interior of the subsea structure.

## Patentansprüche

1. Unterwassereinheit (1) zum Reinigen eines Innenraums (125) einer Unterwasserstruktur (120), die Unterwassereinheit (1) umfassend:
einen Schlauch (19) zum Zuführen von Fluid von einem Einlass in einen Innenraum (125) der zu reinigenden Unterwasserstruktur (120), um den Innenraum zu reinigen;
eine Schlauchtrommel (14), die um eine erste Achse (5) und eine zweite Achse (6) drehbar ist, wobei die Drehung der Schlauchtrommel um die erste Achse (5) dazu dient, den Schlauch (19) in die Unterwasserstruktur (120) einzuführen oder aus dieser herauszuziehen, und die Drehung der Schlauchtrommel um die zweite Achse (6) dazu dient, den Schlauch (19) um seine Längsachse (7) zu drehen; und
einen Zuführer (18) zum Steuern der Beanspruchung im Schlauch während des Zuführens und/oder Zurückziehens des Schlauchs.

2. System (100) zum Reinigen eines Innenraums einer Unterwasserstruktur (120), umfassend die Unterwassereinheit (1) nach Anspruch 1, die Unterwassereinheit (1) weiter umfassend:
einen Fluideinlass (13); und
einen Hydraulikeinlass (12).

3. System nach Anspruch 2, wobei die Unterwassereinheit (1) weiter einen Eingangsanschluss (33) zum Anschluss an die zu reinigende Unterwasserstruktur (120) umfasst, durch welchen Eingangsanschluss (33) der Schlauch (19) geführt werden kann, um in das Innere der Unterwasserstruktur einzutreten.

4. System nach entweder Anspruch 2 oder Anspruch 3, wobei der Schlauch eine Düse (25) umfasst.

5. System nach einem der Ansprüche 2 bis 4, wobei das Fluid Wasser ist oder umfasst.

6. System nach einem der Ansprüche 2 bis 5, wobei die erste und zweite Achse (5, 6) senkrecht zueinander sind.

7. System nach einem der Ansprüche 2 bis 6, wobei die Unterwassereinheit (120) eine Hydraulikantriebseinheit einschließt, die auf einem Rahmen (3) der Unterwassereinheit (1) montiert ist.

8. System nach einem der Ansprüche 2 bis 7, wobei die Schlauchtrommel (14) durch hydraulische Kraft von einer hydraulischen Antriebseinheit, die mit Hydraulikflüssigkeit aus dem Hydraulikeinlass betrieben werden kann, angetrieben wird, um sich um eine oder beide der ersten und zweiten Achse (5, 6) zu drehen.

9. System nach einem der Ansprüche 2 bis 8, wobei die Unterwassereinheit weiter mindestens einen Führungstrichter (15) zur sicheren Befestigung der Unterwassereinheit (1) an einem Unterwasser-Bohrlochkopf umfasst.

10. System nach einem der Ansprüche 2 bis 9, wobei die Unterwassereinheit (1) weiter einen Eingangsverbinder und eine steife Schlauchführung umfasst, die konfiguriert ist, um den Schlauch (19) zumindest einen Teil des Weges von der Schlauchtrommel (14) zum Eingangsverbinder zu führen.

11. System nach einem der Ansprüche 2 bis 10, wobei die Unterwassereinheit (1) weiter eine Unterwasser-Baggersteckdose zum Anschluss an einen Unterwasser-Bagger umfasst.

12. System nach einem der Ansprüche 2 bis 11, weiter umfassend eine Fluidversorgung.

13. Verfahren zur Verwendung des Systems (100) nach einem der Ansprüche 2 bis 12 zur Reinigung des Innenraums (125) der Unterwasserstruktur (120).

14. Verfahren nach Anspruch 13, weiter umfassend die folgenden Schritte:
Bewegen der Unterwassereinheit (1) in Richtung des Meeresbodens (4), um die Einheit in die Nähe der zu reinigenden Unterwasserstruktur (120) zu bringen;
Landen der Unterwassereinheit (1) auf oder neben der zu reinigenden Unterwasserstruktur (120);
Führen des Schlauches (19) in das Innere (125) der Unterwasserstruktur (120); und
Reinigen des Innenraums (125) mechanisch durch Spülung mit Fluid, das über den Schlauch (19) in den Innenraum geleitet wird.

15. Verfahren nach einem der Ansprüche 13 oder 14, was weiter den Schritt des Aussetzens der Unterwassereinheit (1) in ein Meer durch einen Moonpool umfasst.

16. Verfahren nach einem der Ansprüche 13 bis 15, wobei die Unterwassereinheit (1) beim Absenken in die Nähe der Struktur durch Schablonen-Führungslinien geführt wird.

17. Verfahren nach einem der Ansprüche 13 bis 16, wobei die Unterwassereinheit (1) mindestens einen Führungstrichter (15) umfasst, und wobei das Landen der Unterwassereinheit (1) auf oder neben der Unterwasserstruktur den Schritt des Landens des Führungstrichters (15) auf einem vorgesehenen Führungspfosten auf oder in der Nähe der Unterwasserstruktur umfasst.

18. Verfahren nach einem der Ansprüche 13 bis 17, was weiter den Schritt des Drehens des Schlauchs (19) um seine Längsachse umfasst, während ein Ende des Schlauchs (19) in das Innere der Unterwasserstruktur eingeführt wird und/oder während das Innere der Unterwasserstruktur gespült wird.

## Revendications

1. Unité sous-marine (1) pour nettoyer un intérieur (125) d'une structure sous-marine (120), l'unité sous-marine (1) comprenant :
un tuyau flexible (19) pour distribuer un fluide à partir d'une entrée dans un intérieur (125) de la structure sous-marine (120) devant être nettoyée pour nettoyer l'intérieur ;
un dévidoir (14) à tuyau flexible pouvant tourner autour d'un premier axe (5) et d'un second axe (6), dans laquelle la rotation du dévidoir à tuyau flexible autour du premier axe (5) est destinée à alimenter le tuyau flexible (19) dans la structure sous-marine (120) ou à le retirer de celle-ci et la rotation du dévidoir à tuyau flexible autour du second axe (6) est destinée à faire tourner le tuyau flexible (19) autour de son axe longitudinal (7) ; et,
un dispositif d'alimentation (18) pour commander une tension dans le tuyau flexible pendant l'alimentation et/ou le retrait du tuyau flexible.

2. Système (100) pour nettoyer un intérieur d'une structure sous-marine (120), le système comprenant l'unité sous-marine (1) selon la revendication 1, l'unité sous-marine (1) comprenant en outre :
une entrée (13) pour les fluides ; et
une entrée hydraulique (12).

3. Système selon la revendication 2, dans lequel l'unité sous-marine (1) comprend en outre un connecteur d'entrée (33) pour une connexion à la structure sous-marine (120) devant être nettoyée, connecteur d'entrée (33) à travers lequel le tuyau flexible (19) peut être alimenté pour entrer à l'intérieur de la structure sous-marine.

4. Système selon la revendication 2 ou la revendication 3, dans lequel le tuyau flexible comprend une buse (25).

5. Système selon l'une quelconque des revendications 2 à 4, dans lequel le fluide est ou comprend de l'eau.

6. Système selon l'une quelconque des revendications 2 à 5, dans lequel les premier et second axes (5, 6) sont perpendiculaires l'un à l'autre.

7. Système selon l'une quelconque des revendications 2 à 6, dans lequel l'unité sous-marine (120) inclut une unité à puissance hydraulique montée sur un châssis (3) de l'unité sous-marine (1).

8. Système selon l'une quelconque des revendications 2 à 7, dans lequel le dévidoir (14) à tuyau flexible est entraîné pour tourner autour de l'un ou des deux premier et second axes (5, 6) par une puissance hydraulique provenant d'une unité à puissance hydraulique pouvant fonctionner en utilisant un fluide hydraulique provenant de l'entrée hydraulique.

9. Système selon l'une quelconque des revendications 2 à 8, dans lequel l'unité sous-marine comprend en outre au moins un entonnoir de guidage (15) pour monter l'unité sous-marine (1) solidement sur une tête de puits sous-marine.

10. Système selon l'une quelconque des revendications 2 à 9, dans lequel l'unité sous-marine (1) comprend en outre un connecteur d'entrée et un guide de tuyau flexible rigide, configuré pour guider le tuyau flexible (19) au moins sur une partie du trajet allant du dévidoir (14) à tuyau flexible au connecteur d'entrée.

11. Système selon l'une quelconque des revendications 2 à 10, dans lequel l'unité sous-marine (1) comprend en outre une douille de drague sous-marine pour une connexion à une drague sous-marine.

12. Système selon l'une quelconque des revendications 2 à 11, comprenant en outre un dispositif d'apport de fluides.

13. Procédé d'utilisation du système (100) selon l'une quelconque des revendications 2 à 12 pour nettoyer l'intérieur (125) de la structure sous-marine (120).

14. Procédé selon la revendication 13 qui comprend en outre les étapes de :
déplacement de l'unité sous-marine (1) vers le fond marin (4) pour amener l'unité à proximité de la structure sous-marine (120) devant être nettoyée ;
abordage de l'unité sous-marine (1) sur ou de manière adjacente à la structure sous-marine (120) devant être nettoyée ;
guidage du tuyau flexible (19) dans l'intérieur (125) de la structure sous-marine (120) ; et
nettoyage de l'intérieur (125) mécaniquement par rinçage avec un fluide distribué dans l'intérieur à partir du tuyau flexible (19).

15. Procédé selon la revendication 13 ou 14, qui comprend en outre l'étape de déploiement de l'unité sous-marine (1) dans une mer au travers d'un puits central.

16. Procédé selon l'une quelconque des revendications 13 à 15, dans lequel l'unité sous-marine (1) tout en étant abaissée à proximité de la structure est guidée par des câbles-guides de gabarit.

17. Procédé selon l'une quelconque des revendications 13 à 16, dans lequel l'unité sous-marine (1) comprend au moins un entonnoir de guidage (15), et dans lequel l'abordage de l'unité sous-marine (1) sur ou de manière adjacente à la structure sous-marine comprend l'étape d'abordage de l'entonnoir de guidage (15) sur une tige de guidage désignée sur ou près de la structure sous-marine.

18. Procédé selon l'une quelconque des revendications 13 à 17, qui comprend en outre l'étape de rotation du tuyau flexible (19) autour de son axe longitudinal tout en alimentant une extrémité du tuyau flexible (19) dans l'intérieur de la structure sous-marine et/ou tout en rinçant l'intérieur de la structure sous-marine.
